(19) **Europäisches Patentamt / European Patent Office / Office européen des brevets**

(11) **EP 4 363 152 B1**

(12) **FASCICULE DE BREVET EUROPEEN**

(45) Date de publication et mention de la délivrance du brevet:
**14.05.2025   Bulletin 2025/20**

(21) Numéro de dépôt: **22737876.7**

(22) Date de dépôt: **27.06.2022**

(51) Classification Internationale des Brevets (IPC):
**B23K 26/00** (2014.01)   **B23K 26/06** (2014.01)
**B23K 26/0622** (2014.01)   **B23K 26/067** (2006.01)
**B23K 26/082** (2014.01)   **B23K 26/352** (2014.01)
**B23K 103/04** (2006.01)

(52) Classification Coopérative des Brevets (CPC):
**B23K 26/0006; B23K 26/0608; B23K 26/0624; B23K 26/0643; B23K 26/0652; B23K 26/067; B23K 26/082; B23K 26/355;** B23K 2103/05

(86) Numéro de dépôt international:
**PCT/EP2022/067616**

(87) Numéro de publication internationale:
**WO 2023/274982 (05.01.2023 Gazette 2023/01)**

(54) **APPAREIL ET PROCÉDÉ DE GÉNÉRATION D'UN MOTIF NANOSTRUCTURÉ PÉRIODIQUE, UNIFORME ET RÉGULIER EN SURFACE D'UN MATÉRIAU**

VORRICHTUNG UND VERFAHREN ZUR ERZEUGUNG EINES GLEICHMÄSSIGEN UND REGELMÄSSIGEN PERIODISCHEN NANOSTRUKTURIERTEN MUSTERS AUF DER OBERFLÄCHE EINES MATERIALS

APPARATUS AND METHOD FOR GENERATING A UNIFORM AND REGULAR PERIODIC NANOSTRUCTURED PATTERN ON THE SURFACE OF A MATERIAL

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité:  **28.06.2021   FR 2106927**

(43) Date de publication de la demande:
**08.05.2024   Bulletin 2024/19**

(73) Titulaire: **ALPHANOV**
**33400 Talence (FR)**

(72) Inventeurs:
- **SIKORA, Aurélien**
  **33400 Talence (FR)**
- **MINCUZZI, Girolamo**
  **33000 Bordeaux (FR)**
- **CHASSAGNE, Bruno**
  **33600 Pessac (FR)**

(74) Mandataire: **Jacobacci Coralis Harle**
**32, rue de l'Arcade**
**75008 Paris (FR)**

(56) Documents cités:
CN-A- 109 926 712        DE-A1- 102015 214 960
US-A1- 2014 291 308

## Description

### Domaine technique

La présente invention concerne le domaine technique de la formation de microstructures ou de nano-structures en surface de matériaux solides.

Plus précisément, l'invention concerne un système et procédé de nano-structuration ou nano-texturation de surface par laser.

Encore plus précisément, l'invention concerne un appareil et procédé de génération d'un motif nanostructuré périodique en surface d'un matériau.

### Technique antérieure

Les techniques de lithographie optique, électronique ou ionique permettent de graver des motifs de dimensions micrométriques ou nanométriques en surface d'un matériau selon une forme prédéfinie en utilisant un faisceau de photons, d'électrons ou d'ions respectivement. Les techniques de lithographie peuvent être appliquées sur différents matériaux métalliques, semiconducteurs ou diélectriques. Toutefois, ces techniques de fabrication nécessitent l'emploi de machines coûteuses et d'utilisation complexes. De plus, l'application des techniques de lithographie sur de grandes surfaces (par exemple, sur plaque de silicium de 300 mm de diamètre) nécessite plusieurs étapes de fabrication et des durées de fabrication très longues.

Dans le domaine ci-dessus, on connaît la technique de production de motifs par interférence laser directe (ou DLIP selon la terminologie anglo-saxonne Direct Laser Interference Patterning). La publication « Scanner-based Direct Laser Interference Patterning on Stainless Steel », A. Madelung, S. Alamri, T. Steege, B. Krupop, A.F. Lasagni, and T. Kunze, Adv. Eng. Mater., 2021, 2001414, décrit un appareil DLIP comprenant une source laser générant un faisceau d'impulsions laser, un élément optique diffractif (DOE) pour séparer spatialement le faisceau source en deux faisceaux partiels, un prisme pour les paralléliser et un système optique pour focaliser et superposer les deux faisceaux partiels de manière à ce qu'ils interfèrent sur la surface à structurer. En DLIP, les impulsions laser ont en général une durée pouvant varier entre quelques centaines de femtosecondes (fs) et quelques dizaines de nanosecondes (ns). Le système DLIP permet de générer des structures périodiques en surface d'un matériau métallique par exemple de l'acier inox. Lorsque deux faisceaux partiels interfèrent sous un angle d'incidence ALPHA, on produit une distribution d'intensité périodique avec une période spatiale P1 définie selon l'équation suivante :

$$P1 = \frac{\lambda}{2\,sin(ALPHA)}$$ , où $\lambda$ représente la longueur d'onde des impulsions laser et ALPHA l'angle d'incidence de chacun des deux faisceaux laser sur la surface.

Par exemple, les documents DE 102015214960 (décrivant le préambule des revendications 1 et 8), CN 109926712 ou US 2014/291308 décrivent chacun un appareil de structuration de la surface d'un échantillon plat par interférence laser à au moins deux faisceaux.

Avec deux faisceaux partiels, la technique DLIP permet ainsi de générer un motif de traits périodiques. La longueur d'onde du faisceau laser étant par exemple de 1030 nm et l'angle d'incidence ALPHA étant compris entre 10,2et 2,3 degrés, on obtient ainsi une structure périodique DLIP de période P1 comprise entre 2,9 $\mu$m et 12,8 $\mu$m. Le motif périodique est généré sur la zone d'interférence des faisceaux partiels, c'est-à-dire en général sur un diamètre inférieur à une centaine de micromètres. Pour étendre la surface structurée, la publication « Scanner-based Direct Laser Interference Patterning », A. Madelung et al. propose de combiner le système interférométrique DLIP avec un scanner disposé en amont du système optique de focalisation. Le scanner galvanométrique à deux miroirs permet de déplacer la zone d'interférence des faisceaux sur la surface à traiter suivant deux dimensions. La vitesse de balayage ou de translation doit être suffisante pour maintenir le recouvrement voulu. Toutefois, l'ouverture du scanner limite la période spatiale minimum P1 à 2,9 $\mu$m. Pour obtenir un motif de période inférieure à 500 nm, en DLIP, il faut utiliser un laser émettant dans le vert ou l'UV.

D'autre part, on connaît aussi la technique de production de structures de surface périodiques induites par laser (ou LIPSS selon la terminologie anglo-saxonne pour Laser Induced Periodic Surface Structures). La technique LIPSS repose sur l'utilisation d'un seul faisceau laser continu ou impulsionnel ayant une fluence suffisamment élevée. Dans le cas d'un laser à impulsions, la durée des impulsions laser est généralement comprise dans le domaine femtoseconde ou picoseconde (par exemple 1 ps, 10ps, 30 ps ou 40ps). Une lentille focalise le faisceau d'impulsions sur la surface à traiter de manière à ce que le faisceau d'impulsions présente une fluence supérieure au seuil d'ablation du matériau. La fluence appliquée est par exemple de l'ordre de 0,1 J/cm$^2$ pour structurer par LIPPS une surface d'acier inox. La technique LIPSS permet d'induire des motifs périodiques dont l'orientation dépend de la polarisation du faisceau laser. Plus précisément, le faisceau laser étant polarisé linéairement, les traits du motif sont alignés perpendiculairement à la polarisation du faisceau laser. Les motifs périodiques ont une période spatiale supérieure à une demi longueur d'onde du laser (dans le cas des LIPSS haute fréquence spatiale, ou HSFL pour High spatial frequency LIPSS) et inférieure ou égale à la longueur d'onde du laser (dans le cas des LIPSS basse fréquence spatiale, ou LSFL pour Low spatial frequency LIPSS). L'étendue des motifs induits par LIPSS est limitée par la taille du faisceau laser sur la surface à traiter. Le document de brevet US 2014/0083984 divulgue un appareil LIPSS comprenant un scanner galvanométrique à deux dimensions pour balayer le faisceau laser sur la surface à traiter. Toutefois, les motifs induits par LIPSS ne sont généralement pas organisés de manière homogène spatialement à l'échelle sub-millimétrique. De plus, la LIPSS reste difficile à contrôler du fait de la forte sensibilité de ce procédé au type de matériau et aux paramètres d'irradiation laser, ce qui nuit à la reproductibilité et à l'uniformité des motifs périodiques. Les phénomènes physiques à l'origine des motifs de surface induits par laser ne sont pas encore bien compris. Toutefois, les motifs de surface LIPSS semblent trouver leur origine dans une interaction entre le faisceau laser incident avec des ondes électromagnétiques de surface, ou plasmons de surface, excités par le rayonnement incident.

Un des buts de l'invention est de proposer un système et une méthode de nano-structuration ou nano-texturation de surface, qui permette de générer des motifs périodiques de période sub-micrométrique ou nanométrique, ces motifs étant réguliers sur une grande surface, i.e. sur une surface de dimensions de l'ordre de plusieurs cm$^2$ ou plusieurs dizaines de cm$^2$.

Un autre but de l'invention est de proposer un système et une méthode de nano-structuration ou nano-texturation de surface, qui soit rapide, plus simple et moins coûteux que les solutions de l'art antérieur, en particulier la lithographie.

## Exposé de l'invention

L'invention concerne plus précisément un appareil de génération d'un motif nanostructuré périodique sur une surface d'un matériau tel que défini dans la revendication 1, l'appareil comprenant une source laser adaptée pour générer un faisceau d'impulsions source à une longueur d'onde $\lambda$, un séparateur optique de faisceau disposé pour séparer spatialement le faisceau d'impulsions source en un premier faisceau secondaire et un second faisceau secondaire, un premier système optique configuré pour diriger le premier faisceau secondaire et le second faisceau secondaire parallèlement à une même direction avec une distance de séparation non nulle, un système optique de focalisation ayant une ouverture adaptée pour recevoir le premier faisceau secondaire et le second faisceau secondaire, le système optique de focalisation étant apte à focaliser et superposer le premier faisceau secondaire et le second faisceau secondaire sur une même zone de la surface du matériau sous un angle d'incidence ALPHA dans un plan d'incidence, le premier faisceau secondaire et le second faisceau secondaire étant polarisés linéairement avec un état de polarisation dans le plan d'incidence. Selon l'invention, les impulsions source ont une durée comprise entre 100 fs et 100 ps, et le premier faisceau secondaire et le second faisceau secondaire superposés spatialement et temporellement dans ladite zone ont une fluence supérieure au seuil d'ablation du matériau, l'angle d'incidence ALPHA et/ou la fluence étant ajustés de manière à induire un motif nanostructuré périodique s'étendant dans une direction transverse au plan d'incidence, le motif nanostructuré périodique présentant dans le plan d'incidence une période de modulation spatiale égale à

$$P2 = \frac{P1}{N}$$

où N est un nombre entier supérieur ou égal à 2 et P1 représente une période spatiale inhérente aux interférences entre le premier faisceau secondaire et le second faisceau secondaire définie par

$$P1 = \frac{\lambda}{2.\sin(ALPHA)}.$$

L'appareil et le procédé permettent de générer un motif nanostructuré périodique, régulier, homogène et de période spatiale égale à une fraction entière de la période spatiale P1 obtenue par interférence DLIP classique. L'appareil et le procédé permettent de générer ce motif nanostructuré de période submicrométrique ou nanométrique organisé de manière homogène sur une grande surface et en un temps limité.

L'utilisation d'un laser picoseconde rend l'appareil et le procédé moins coûteux qu'un système basé sur un laser femtoseconde.

Dans un exemple d'application, la gamme de fluence sur cible est comprise inférieure ou égale à 2,1 J/cm$^2$.

Selon un aspect particulier et avantageux, l'appareil comporte des moyens d'ajustement de la polarisation du faisceau d'impulsions source et/ou des moyens d'ajustement de la polarisation du premier faisceau secondaire et du second faisceau secondaire.

Avantageusement, le premier système optique comporte une ligne à retard optique variable pour synchroniser le premier faisceau secondaire et le second faisceau secondaire.

Dans un exemple de réalisation, le séparateur optique de faisceau comporte une lame séparatrice.

De façon avantageuse, le premier système optique comporte un prisme ajustable en translation pour ajuster la distance de séparation entre le premier faisceau secondaire et le second faisceau secondaire.

Selon l'invention, l'appareil comporte un scanner disposé entre le premier système optique et le système optique de focalisation, le scanner étant configuré pour balayer la surface du matériau avec le premier faisceau secondaire et le second faisceau secondaire focalisés sur ladite surface, suivant une ou deux directions transverses à la normale à la surface du matériau au point de focalisation.

De façon alternative ou complémentaire, l'appareil comporte une platine de déplacement adaptée pour déplacer le matériau suivant au moins une direction transverse à la normale à la surface du matériau au point de focalisation.

Avantageusement, la source laser comprend un laser émettant à une longueur d'onde comprise entre 200 nm et 1100 nm, par exemple entre 343 nm et 1064 nm.

Selon l'invention, le système optique de focalisation comprend une lentille F-Theta de longueur focale f, ayant une ouverture supérieure ou égale à 0,8*f et/ou dont la longueur focale f est inférieure à 40 mm.

L'invention concerne aussi un procédé de génération d'un motif nanostructuré périodique en surface d'un matériau tel que défini dans la revendication 8, le procédé comprenant les étapes de : génération d'un faisceau d'impulsions source à une longueur d'onde $\lambda$, les impulsions source ayant une durée comprise entre cent femtosecondes et cent picosecondes ; séparation optique spatiale du faisceau d'impulsions source en un premier faisceau secondaire et un second faisceau secondaire ; orientation du premier faisceau secondaire et du second faisceau secondaire parallèlement à une même direction avec une distance de séparation d non nulle ; focalisation et superposition du premier faisceau secondaire et du second faisceau secondaire sur une même zone de la surface du matériau avec un angle d'incidence ALPHA dans un plan d'incidence, le premier faisceau secondaire et le second faisceau secondaire étant polarisés linéairement avec un état de polarisation dans le plan d'incidence, le premier faisceau secondaire et le second faisceau secondaire, superposés spatialement et temporellement dans ladite zone, ayant une fluence supérieure au seuil d'ablation du matériau, l'angle d'incidence ALPHA et/ou la fluence étant ajustés de manière à induire un motif nanostructuré périodique s'étendant dans une direction transverse au plan d'incidence, le motif nanostructuré périodique présentant dans le plan d'incidence une période de modulation spatiale égale à :

$$P2 = \frac{P1}{N}$$ , où N est un nombre entier supérieur ou égal à 2 et P1 représente une période spatiale inhérente aux interférences entre le premier faisceau secondaire et le second faisceau secondaire définie par

$$P1 = \frac{\lambda}{2.\sin(ALPHA)}$$ .

Bien entendu, les différentes caractéristiques, variantes et formes de réalisation de l'invention peuvent être associées les unes avec les autres selon diverses combinaisons dans la mesure où elles ne sont pas incompatibles ou exclusives les unes des autres.

**Brève description des dessins**

De plus, diverses autres caractéristiques de l'invention ressortent de la description annexée effectuée en référence aux dessins qui illustrent des formes, non limitatives, de réalisation de l'invention et où :

La figure 1 est une vue schématique d'un appareil selon l'invention,
La figure 2 est une image obtenue par microscope électronique à balayage (MEB) d'une surface nano-structurée selon la présente divulgation, sur une surface d'environ 50$\mu$m*50$\mu$m, avec en insert la transformée de Fourier de l'image MEB ;
La figure 3 est une image par MEB de la même surface nano-structurée que la figure 2, avec un plus fort grossissement ;
La figure 4 représente la distribution angulaire des motifs nanostructurés extraits de la figure 3 ;
La figure 5 est une vue de profil obtenue par AFM des motifs nanostructurés, le profil étant pris suivant une ligne transverse à la direction des traits du motif de la figure 3.

Il est à noter que sur ces figures les éléments structurels et/ou fonctionnels communs aux différentes variantes peuvent présenter les mêmes références.

**Description détaillée**

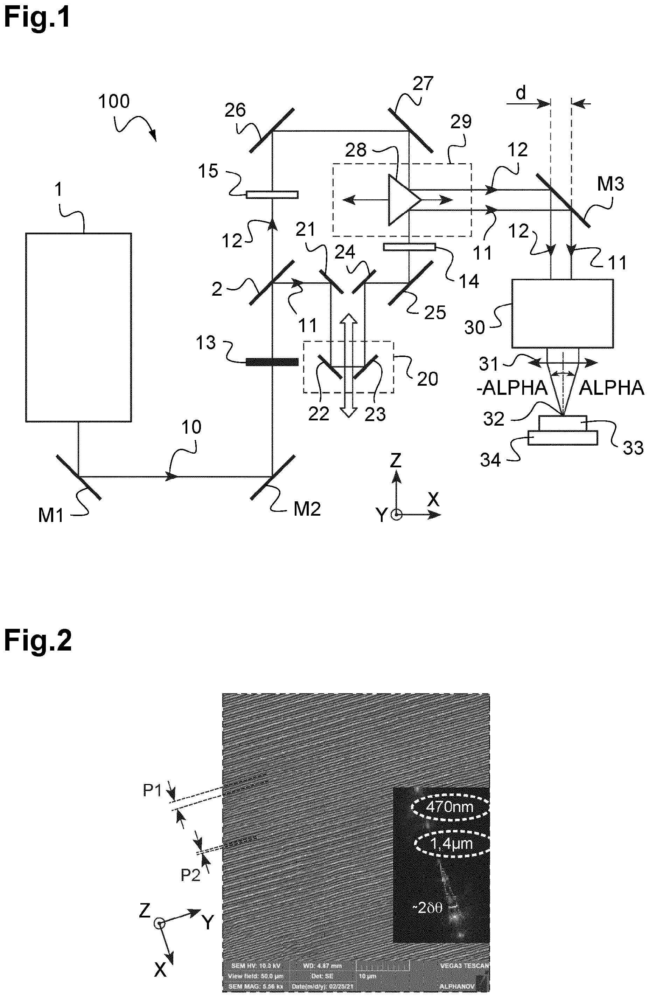

La figure 1 représente un appareil 100 de génération de motif nanostructuré. On a aussi représenté un repère orthonormé XYZ.

L'appareil 100 comporte principalement une source laser 1 à impulsions, un séparateur optique de faisceau 2, un prisme 28, un scanner 30 et un système optique de focalisation 31. De façon avantageuse, l'appareil 100 comporte un dispositif d'ajustement en polarisation 13, 14, 15 des faisceaux laser.

La source laser 1 est par exemple un laser émettant des impulsions à une longueur d'onde $\lambda$, généralement dans la gamme de 343 à 1064 nm. Les impulsions émises par le laser forment un faisceau d'impulsions source 10. Dans notre exemple, le laser 1 est un laser Sirius (de marque Spark). La longueur d'onde $\lambda$ est de 1064 nm, avec une largeur spectrale d'environ 0.3 nm. La durée des impulsions source est supérieure à 100 fs et inférieure à 100 picosecondes (ps), par exemple de 10 ps. La fréquence de répétition des impulsions est comprise entre 1 Hz (mode mono-impulsion ou single pulse mode) et 1 MHz, par exemple ici de 30 kHz.

Le laser utilisé dans cet exemple a une puissance d'environ ~2.4 W, une fluence maximum sur cible d'environ ~2,1 J/cm$^2$ et une polarisation linéaire.

De façon optionnelle, un ou plusieurs miroirs plans M1, M2 permettent de replier le faisceau source et de le diriger vers un séparateur optique de faisceau 2.

Le séparateur optique de faisceau 2 sépare spatialement le faisceau d'impulsions source 10 en un premier faisceau secondaire 11 et un second faisceau secondaire 12. Le séparateur optique de faisceau 2 est ici constitué d'une lame séparatrice, par exemple une lame de silice fondue, à faces planes et parallèles, de 5 mm d'épaisseur. De façon optionnelle, une lame quart d'onde 13 (ou lame $\lambda$/4) est disposée en amont de la lame séparatrice 2 pour répartir à égalité l'énergie du faisceau d'impulsions source 10 entre le premier faisceau secondaire 11 et le second faisceau secondaire 12.

Un ensemble de miroirs plans 21, 22, 23, 24, 25 dirige le premier faisceau secondaire 11 vers une face d'un prisme 28 droit. Un autre ensemble de miroirs plans 26, 27 dirige le second faisceau secondaire 12 vers une autre face du prisme 28. Après réflexion sur le prisme 28, le premier faisceau secondaire 11 et le second faisceau secondaire 12 sont parallèles à une même direction, par exemple la direction X sur la figure 1, tout en étant espacés d'une distance d non nulle. Les miroirs plans 21, 22, 23, 24, 25, 26, 27 et le prisme 28 forment ici un premier système optique pour orienter le premier faisceau secondaire et le second faisceau secondaire parallèlement à la même direction. En variante, deux autres miroirs plans peuvent être utilisés à la place du prisme 28.

De façon avantageuse, un dispositif d'ajustement 29 de la distance de séparation d entre le premier faisceau secondaire 11 et le second faisceau secondaire 12 comprend le prisme 28 monté mobile en translation suivant la direction X. En effet, la translation du prisme 28 suivant la direction X permet d'ajuster la distance d entre le premier faisceau secondaire 11 et le second faisceau secondaire 12.

De plus, les miroirs 22 et 23 sont montés solidairement mobiles en translation, par exemple suivant la direction Z de manière à former une ligne à retard optique 20 variable. L'ajustement en position des miroirs 22 et 23 permet d'adapter la différence de chemin optique entre le premier faisceau secondaire 11 et le second faisceau secondaire 12 et de synchroniser le premier faisceau secondaire 11 avec le second faisceau secondaire 12 sur la surface 32 du matériau 33 à traiter.

Une lame demi-onde 14 (ou lame λ/2) est disposée sur le trajet optique du premier faisceau secondaire 11 pour ajuster l'orientation en polarisation du premier faisceau secondaire 11. De manière analogue, une autre lame demi-onde 15 est disposée sur le trajet optique du second faisceau secondaire 12 pour ajuster l'orientation en polarisation du second faisceau secondaire 12.

De façon optionnelle, un miroir plan M3 de renvoi, orienté ici à 45 degrés par rapport à la direction X, change simultanément les directions du premier faisceau secondaire 11 et du second faisceau secondaire 12 pour les orienter selon la direction Z vers un système optique de focalisation 31. Le premier faisceau secondaire 11 et du second faisceau secondaire 12 restent parallèles entre eux et séparés de la distance d jusqu'à l'entrée du scanner 30 et du système optique de focalisation 31.

Le système optique de focalisation 31 comporte une lentille de type F-theta, de longueur focale f. On choisit une lentille F-theta ayant une focale courte et une pupille d'entrée de très grande ouverture qui permet de recevoir des faisceaux espacés d'une distance transverse d de l'ordre de 10 mm à 24 mm, par exemple de 24 mm. Par exemple, la lentille de type F-theta a une focale f et une pupille d'entrée dont le diamètre varie entre k1f et k2f avec k1 = 0,80 et k2 = 0,93.

Le système optique de focalisation 31 focalise et superpose simultanément le premier faisceau secondaire 11 et le second faisceau secondaire 12 sur une même zone 32 de la surface du matériau 33 à traiter. On considère ici que la figure 1 représente le plan d'incidence, c'est-à-dire le plan contenant le premier faisceau secondaire 11 et le second faisceau secondaire 12 et perpendiculaire à la zone 32 de la surface du matériau 33 à traiter. Comme décrit ci-dessus, le premier faisceau secondaire 11 et le second faisceau secondaire 12 sont incidents sur la lentille F-theta, tout en étant parallèles à l'axe optique de la lentille F-theta et en étant chacun excentré d'une distance d/2 par rapport à cet axe optique. La surface 32 du matériau à traiter est disposée dans le plan focal de la lentille F-Theta, l'axe optique de la lentille F-theta étant perpendiculaire à la surface 32 à traiter. Autrement dit, l'axe optique de la lentille F-theta, le premier faisceau secondaire 11 et le second faisceau secondaire 12 sont situés dans le plan d'incidence. La lentille de focalisation permet ainsi de superposer spatialement le premier faisceau secondaire 11 et le second faisceau secondaire 12 sur une zone 32 du matériau 33 à traiter.

La lame demi-onde 14 (ou lame λ/2) et/ou l'autre lame demi-onde 15 sont ajustées en orientation de manière à ce que le premier faisceau secondaire 11 et le second faisceau secondaire 12 soient tous deux polarisés linéairement dans le plan d'incidence.

Enfin, l'ajustement de la distance d entre le premier faisceau secondaire 11 et le second faisceau secondaire 12 permet d'ajuster l'angle d'incidence de ces faisceaux sur la zone 32. Le premier faisceau secondaire 11 forme un angle d'incidence +ALPHA sur ladite zone 32 et, respectivement, le second faisceau secondaire 12 forme un angle d'incidence symétrique -ALPHA sur ladite zone 32.

De façon optionnelle et particulièrement avantageuse, l'appareil comporte un scanner 30 disposé entre le miroir M3 et le système optique de focalisation 31. Le scanner 30 est configuré pour balayer la surface du matériau avec le premier faisceau secondaire 11 et le second faisceau secondaire 12 focalisés sur ladite surface, suivant une ou deux directions transverses à la normale à la surface du matériau au point de focalisation. A titre d'exemple non limitatif, le scanner comporte deux miroirs plans montés sur des actionneurs galvanométriques et disposés en série sur le trajet du premier faisceau secondaire 11 et du second faisceau secondaire 12. Un des miroirs galvanométriques permet de balayer la surface à traiter suivant la direction X et l'autre miroir galvanométrique suivant la direction Y. Avantageusement, le scanner 30 a une pupille d'entrée de 30 mm.

De manière alternative ou complémentaire, l'appareil comporte une platine de déplacement 34 adaptée pour déplacer le matériau 33 suivant au moins une direction transverse à la normale à la surface du matériau 33 au point de focalisation 32. Par exemple, la platine de déplacement 34 est une platine de translation à deux dimensions en XY ou une platine de translation à trois dimensions en XYZ. La platine permet de déplacer la surface de l'échantillon par rapport aux faisceaux incidents pour traiter des zones en dehors du champ du scanner galvanométrique et/ou pour traiter des zones non adjacentes par une technique combinée de balayage et piquage (scanning and stiching, en terminologie anglo-saxonne).

Procédé

On génère un faisceau d'impulsions source 10. Les impulsions source 10 ont une durée d'impulsion supérieure à 100 fs et inférieure à 100 picosecondes (ps), par exemple de 10 ps. La largeur spectrale maximum des impulsions source 10 est limitée à environ 5 nm, pour ne pas risquer de détériorer la qualité des interférences en termes de contraste et d'homogénéité spatiale. Les impulsions source 10 sont émises à une fréquence de répétition de 30 kHz. Les impulsions source 10 ont une longueur d'onde $\lambda$ de 1064 nm. On sépare spatialement le faisceau d'impulsions source 10 en un premier faisceau secondaire 11 et un second faisceau secondaire 12 au moyen d'une lame séparatrice 2. De façon avantageuse, on ajuste la répartition d'énergie entre le premier faisceau secondaire 11 et le second faisceau secondaire 12, de manière à ce qu'ils aient à peu près la même énergie, par exemple en orientant la lame quart d'onde 13 (ou lame $\lambda/4$) disposée en amont de la lame séparatrice 2. On utilise des composants optiques à miroirs 21, 22, ...27 et un prisme 28 droit pour diriger le premier faisceau secondaire 11 et le second faisceau secondaire 12 parallèlement à une même direction, par exemple la direction X, tout en les espaçant d'une distance d non nulle, par exemple de 24 mm. De façon avantageuse, on déplace le prisme 28 pour ajuster la distance d. De plus, on utilise une ligne à retard optique 20 variable pour synchroniser les impulsions du premier faisceau secondaire 11 et du second faisceau secondaire 12. A titre d'exemple, la platine de déplacement de la ligne à retard optique permet d'ajuster la synchronisation à ~70 fs près, soit ~0,7 % de la durée d'impulsion dans ce cas.

On focalise et on superpose spatialement le premier faisceau secondaire 11 et le second faisceau secondaire 12 sur une même zone 32 de la surface du matériau 33 à traiter. La distance focale est par exemple de 30 mm. On ajuste la polarisation du premier faisceau secondaire 11 et/ou du second faisceau secondaire 12 de manière à ce qu'ils aient la même polarisation lorsqu'ils sont incidents sur la zone à traiter. De cette manière, le premier faisceau secondaire 11 et le second faisceau secondaire 12 sont superposés spatialement, temporellement et avec la même polarisation sur la zone à traiter. Le premier faisceau secondaire 11 et le second faisceau secondaire 12 peuvent ainsi interférer dans la zone 32 de la surface du matériau 33 à traiter.

Plus précisément, on polarise le premier faisceau secondaire 11 et le second faisceau secondaire 12 linéairement dans le plan d'incidence. Comme décrit plus en détail ci-dessous, cette configuration permet d'induire des nanostructures de type LIPSS disposées entre les nanostructures générées par DLIP, les nanostructures LIPSS ayant la même orientation que les nanostructures générées par DLIP, autrement dit d'orienter les traits des nanostructures de type LIPSS parallèlement aux interférences de type DLIP. La fluence reçue par la zone 32 est supérieure au seuil d'ablation du matériau. Dans l'exemple illustré sur les figures 2 à 6, la fluence est comprise entre 70 mJ/cm$^2$ et 100 mJ/cm$^2$. A titre indicatif, le seuil d'ablation de l'acier inox est d'environ : ~0.1 J/cm$^2$.

On utilise, conformément à l'invention, un scanner 30 pour balayer la surface du matériau 33 avec les faisceaux interférents sur un champ de $\pm5$ degrés. Dans les exemples illustrés sur les figures 2 à 6, la puissance moyenne du faisceau laser focalisé est de l'ordre d'une centaine de milliwatts.

La présente divulgation permet d'obtenir une nanostructuration ou nanotexturation de la zone 32 de la surface du matériau 33 avec un motif périodique à une période LIPSS, P2, qui est associée ou déterminée par la période DLIP P1. Dans l'art antérieur, les nanostructures induites par LIPSS (de type low spatial frequency LIPSS) ont toujours une période proche de la longueur d'onde laser $\lambda$. Selon la présente divulgation, les nanostructures de type DLIP formées par interférences entre les faisceaux secondaires 11 et 12, permettent d'outrepasser cette limite en formant des nanostructures de type LIPSS ayant une période P2 inférieure à la moitié de la longueur d'onde des impulsions, autrement dit P2 <$\lambda/2$. De plus, la configuration DLIP permet d'orienter les nanostructures de façon précise et régulière. Plus précisément, on obtient ainsi un motif de période P2 égale à une fraction entière de la période P1 des interférences DLIP. A la connaissance des inventeurs, un tel phénomène n'a semble-t-il pas encore été observé jusqu'à présent et n'était pas prévisible.

Les motifs périodiques obtenus sont très réguliers. Selon l'invention, le scanner étend l'aire nanostructurée périodiquement en balayant la surface de l'échantillon, tout en superposant les taches de focalisation, avec un recouvrement spatial d'au moins 50%, par exemple de 60 % ou 80%. On obtient ainsi un motif périodique à une période P2, qui est inférieure à la moitié de la longueur d'onde du faisceau laser.

Sans être lié par une interprétation physique des phénomènes mis en jeu, il semble qu'il y ait interaction entre les interférences DLIP à la période P1 et des plasmons de surface pour induire des interférences supplémentaires ou des harmoniques entre deux traits du réseau d'interférences à la période P1. Selon la fluence appliquée, on peut obtenir un motif périodique à une période P2 égale à P1/2 ou P1/3. Dans certaines configurations, notamment en augmentant la période P1, il est possible d'obtenir un motif périodique à une période P2 égale à P1/4.

Les figures 2 à 6 illustrent un exemple d'application de l'appareil et du procédé de la présente divulgation. Le matériau à traiter est ici un échantillon plan d'acier inox. Toutefois, l'appareil et le procédé ne sont nullement limités à cet exemple d'application. L'appareil et le procédé de la présente divulgation permettent de former des nanostructures sur d'autres matériaux métalliques ou métallisés ou encore sur des matériaux non métalliques, tels que des semiconducteurs ou des matériaux diélectriques.

La longueur d'onde du faisceau d'impulsions source est ici de 1064 nm et l'angle d'incidence ALPHA des faisceaux secondaires 11, 12 est de 22,3 degrés.

Par interférence DLIP classique, on obtient des structures périodiques ayant une période P1 qui est déterminée par l'angle d'incidence ALPHA et la longueur d'onde des faisceaux laser incident, selon la formule indiquée plus haut.

Dans un exemple, une longueur d'onde λ de 1064 nm, une distance d entre les faisceaux de 24 mm et une distance focale de 30 mm conduisent à une période P1 d'interférences DLIP d'environ 1,4 μm.

Selon la présente divulgation, on se place dans des conditions opérationnelles plus restreintes que la technique DLIP classique, ce qui permet d'obtenir des nanostructures de période spatiale plus petite que des nanostructures DLIP classiques. En particulier, la fluence et le nombre d'impulsions dans la zone d'interférence sont ici ajustés.

Dans l'exemple illustré sur les figures 2 à 6, la fluence appliquée sur un échantillon d'acier inox poli miroir est comprise entre 70 mJ/cm² et 100 mJ/cm². Dans ces conditions, on applique entre 6 et 10 passages, ce qui correspond à une durée de traitement d'environ ~4 s/mm². Les passages sont effectués sur la même zone, dans l'exemple ici décrit à une fréquence de répétition de 30 kHz, avec un recouvrement dans le sens de balayage (horizontal) d'environ 88% et un recouvrement vertical d'environ 75%. On obtient ainsi sur la surface du matériau, un motif de traits périodiques orientés perpendiculairement au plan d'incidence et donc à la direction de polarisation des faisceaux secondaires 11, 12. Le motif structuré présente une période spatiale unique P2 qui est très uniforme sur la surface traitée. De façon inattendue, la période P2 du motif obtenu est très inférieure à la période P1 obtenue classiquement en DLIP et aussi très inférieure à la période LIPSS attendue (de l'ordre de la longueur d'onde, ici, de 1064 nm). Plus précisément, on observe que le motif périodique obtenu par l'invention a une période spatiale P2 égale à une fraction entière de la période P1. Autrement dit, la période spatiale obtenue P2

est égale à $P2 = \dfrac{P1}{N} = \dfrac{\lambda}{2N\sin(ALPHA)}$ où N est un nombre entier supérieur ou égale à 2. Dans l'exemple illustré sur les figures 2 à 6, P2 est égal à 470 nm. Autrement dit, P2 est ici égal à P1/3, dans ce cas le nombre entier N est égal à 3.

Il est possible d'obtenir un motif périodique avec N=2, en ajustant la fluence entre 130 mJ/cm² et 150 mJ/cm² après un seul passage et avec le même recouvrement spatial que pour N=3, ce qui correspond à une dose d'énergie cumulée comprise entre 3.4 J/cm² et 4 J/cm².

Pour obtenir un motif avec une période P2 avec N supérieur à 3, il est préférable d'augmenter la période P1, en modifiant l'angle d'incidence des faisceaux secondaires 11, 12. La modification de la longueur d'onde change ici simultanément la période LIPSS et DLIP. Pour changer uniquement la période DLIP, il est alors nécessaire de changer l'angle d'incidence ALPHA des faisceaux interférents.

La modification de la longueur d'onde change simultanément et proportionnellement la période LIPSS, P2, et la période DLIP, P1.

A la différence de la technique de formation des structures LIPSS conventionnelles de type basse fréquence spatiale (ou low spatial frequency LIPSS), qui n'utilise qu'un seul faisceau laser, la période du motif obtenu n'est ici pas proche de la longueur d'onde du faisceau laser mais inférieure à la moitié de la longueur d'onde. Plus précisément, dans l'exemple décrit plus haut, P2 est égale à 44% de la longueur d'onde.

La durée des impulsions est comprise entre 100 fs et environ 100 ps, et par exemple entre 1 ps et 10 ps. D'une part, une largeur de bande d'émission trop importante (>5 nm) ne permet pas d'obtenir des interférences ayant un contraste uniforme spatialement, pour l'usinage de structures homogènes. D'autre part, la durée d'impulsion inférieure à 100 ps permet d'éviter des effets thermiques susceptibles de faire fondre les motifs périodiques induits.

Les faisceaux secondaires 11, 12 sont focalisés sur une zone 32 ayant un diamètre d'environ 60 μm. Pour étendre la surface de la zone traitée, on utilise le scanner 30 pour balayer la surface avec les faisceaux secondaires 11, 12 en configuration d'interférence.

Le scanner a ici une très grande ouverture, de l'ordre de 30 mm, pour laisser passer les faisceaux secondaires 11, 12 séparés de la distance d, tout en permettant un balayage sur un champ important, par exemple de ± 5 degrés. Le balayage du scanner est effectué successivement dans les directions X et Y. Dans le sens de balayage, la surface texturée a été obtenue avec 8.4 pps/passage, où pps signifie impulsion par spot (pulse per spot en anglais) avec un recouvrement spatial de 88%, et un nombre de passages variant entre 6 et 10. Dans la direction perpendiculaire au balayage, le recouvrement s'élève à 75%. Ces conditions équivalent à une dose d'énergie cumulée comprise entre 11 et 26 J/cm².

La figure 2 est une image de microscopie électronique à balayage d'une surface traitée selon le procédé et avec l'appareil de la présente divulgation. On observe le motif de traits périodiques orientés perpendiculairement au plan d'incidence et à la polarisation des faisceaux secondaires 11, 12 incidents.

En insert sur la figure 2, on a montré une transformée de Fourier de l'image MEB qui indique que la surface métallique nanostructurée a une période, P2, bien déterminée de 470 nm avec une distribution angulaire δθ d'environ 5,1 degrés. On observe aussi la période P1 à 1,4 μm, moins intense que la période à 470 nm. Cette distribution angulaire d'environ 5 degrés est beaucoup plus étroite que celle obtenue par la technique antérieure LIPSS (supérieure à 20 degrés). Cette distribution angulaire étroite montre que le motif périodique a une orientation unique, bien définie.

Le balayage des faisceaux secondaires 11, 12 superposés avec un recouvrement entre spots supérieur à 50% permet d'obtenir une texturation homogène sur toute la surface traitée, par exemple de 0,5 mm x 0,5 mm. La vitesse de balayage du scanner est de 0,2 m/s. Le scanner permet de nanostructurer la surface avec une vitesse de quelques secondes par mm$^2$ à une fréquence de répétition de 30 kHz.

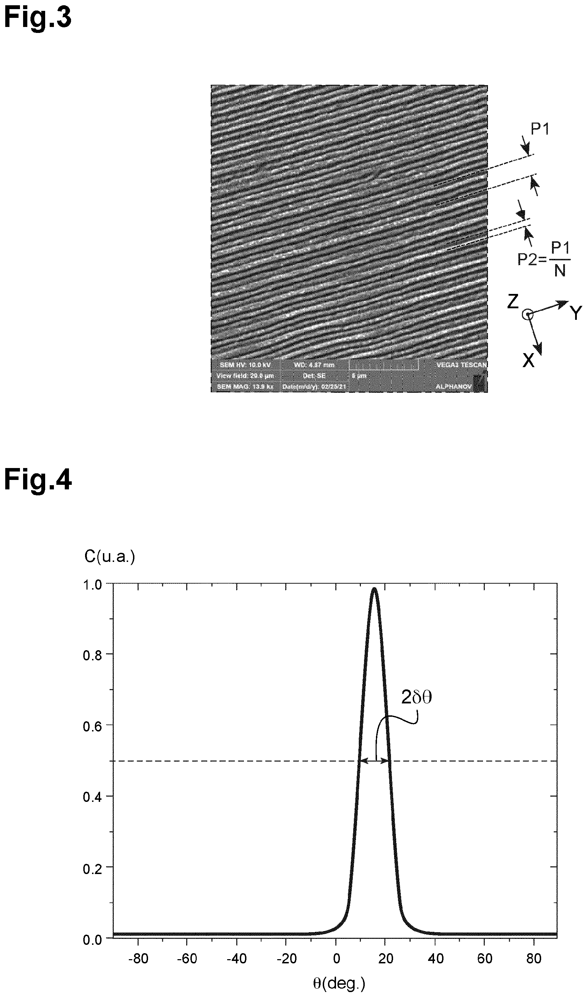

La figure 3 montre un agrandissement de la figure 2 sur une zone de l'échantillon. La flèche représente la direction de polarisation des faisceaux secondaires 11, 12, dans le plan d'incidence XZ.

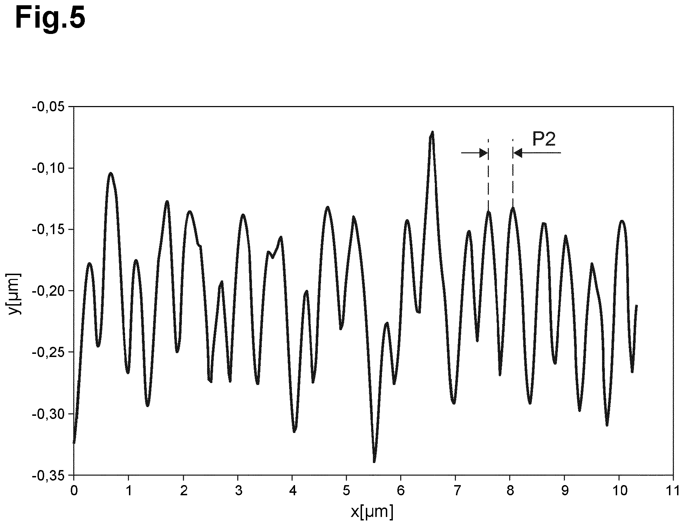

La figure 5 représente un profil des traits acquis par AFM suivant une ligne transverse aux traits. La figure 5 montre que les nanostructures sont fortement modulées, avec une profondeur de modulation comprise entre 100 nm et 250 nm. La période de modulation P2 est très uniforme sur la surface traitée.

Ce procédé permet de traiter simplement, avec un seul laser et un scanner galvanométrique, une surface et d'obtenir un motif périodique de période inférieure à 500 nm. On obtient ainsi une surface métallique irisée et colorée. La couleur apparente varie en particulier selon la période du motif et l'orientation de l'échantillon. Il est aisé d'ajuster la période en faisant varier la distance entre les faisceaux, ce qui modifie l'angle d'incidence sur la surface à traiter.

La présente divulgation trouve des applications dans de nombreux secteurs industriels comme l'électronique, l'électroménager, l'aéronautique, naval, médical, ou encore l'anticontrefaçon. La possibilité de générer des structures périodiques ou régulières à l'échelle nanométrique ou sub-micrométrique sur la surface de différents types de matériaux, permet notamment de fonctionnaliser cette surface. On peut ainsi modifier les propriétés optiques de surface par exemple pour obtenir un traitement antireflet ou pour donner une couleur apparente au matériau traité. Le traitement peut aussi servir à améliorer des propriétés catalytiques, antibactériennes, hydrophobiques et/ou tribologiques de la surface. La surface traitée peut présenter de nouvelles propriétés par exemple antisalissure (antifouling), antibactériennes et/ou anti-virus.

L'appareil et la méthode divulgués permettent de générer une nanostructuration de surface homogène, très régulière. On peut aisément définir l'orientation du motif en fonction de l'orientation du plan d'incidence et de la polarisation des faisceaux secondaires qui interfèrent.

**Revendications**

1. Appareil (100) de génération d'un motif nanostructuré périodique sur une surface d'un matériau (33), l'appareil (100) comprenant une source laser (1) adaptée pour générer un faisceau d'impulsions source (10) à une longueur d'onde λ, un séparateur optique (2) de faisceau disposé pour séparer spatialement le faisceau d'impulsions source (10) en un premier faisceau secondaire (11) et un second faisceau secondaire (12), un premier système optique (21, 22, 23, 24, 25, 26, 27, 28) configuré pour diriger le premier faisceau secondaire (11) et le second faisceau secondaire (12) parallèlement à une même direction avec une distance de séparation non nulle, un système optique de focalisation (31) ayant une ouverture adaptée pour recevoir le premier faisceau secondaire (11) et le second faisceau secondaire (12), le système optique de focalisation (31) étant apte à focaliser et superposer le premier faisceau secondaire (11) et le second faisceau secondaire (12) sur une même zone (32) de la surface du matériau (33) sous un angle d'incidence ALPHA dans un plan d'incidence, le premier faisceau secondaire (11) et le second faisceau secondaire (12) étant polarisés linéairement avec un état de polarisation dans le plan d'incidence, **caractérisé en ce que** l'appareil comporte un scanner (30) disposé entre le premier système optique (21, 22, 23, 24, 25, 26, 27, 28) et le système optique de focalisation (31), le système optique de focalisation (31) comprenant une lentille F-Theta de longueur focale f, ayant une ouverture supérieure ou égale à 0,8*f et dont la longueur focale f est inférieure à 40 mm, la distance de séparation allant de 10 mm à 24 mm, le scanner étant configuré pour balayer la surface du matériau avec le premier faisceau secondaire (11) et le second faisceau secondaire (12) focalisés sur ladite surface sur un champ de ±5 degrés, suivant une ou deux directions transverses à la normale à la surface du matériau au point de focalisation tout en superposant les taches de focalisation avec un recouvrement spatial d'au moins 50%, les impulsions source ont une durée comprise entre 100 fs et 100 ps, et **en ce que** le premier faisceau secondaire (11) et le second faisceau secondaire (12) superposés spatialement et temporellement dans ladite zone ont une fluence supérieure au seuil d'ablation du matériau, l'angle d'incidence ALPHA et/ou la fluence étant ajustés de manière à induire un motif nanostructuré périodique s'étendant dans une direction transverse au plan d'incidence, le motif nanostructuré périodique présentant dans le plan d'incidence une période de modulation spatiale P2 égale à une fraction entière d'une période spatiale

$$P1 : P2 = \frac{P1}{N},$$ où N est un nombre entier supérieur ou égal à 2 et P1 représente une période spatiale inhérente aux interférences entre le premier faisceau secondaire et le second faisceau secondaire définie par

$$P1 = \frac{\lambda}{2\,sin(ALPHA)}.$$

**2.** Appareil (100) selon la revendication 1 comportant des moyens d'ajustement (13) de la polarisation du faisceau d'impulsions source (10) et/ou des moyens d'ajustement (14, 15) de la polarisation du premier faisceau secondaire (11) et du second faisceau secondaire (12).

**3.** Appareil (100) selon l'une des revendications 1 à 2 dans lequel le premier système optique (21, 22, 23, 24, 25, 26, 27, 28) comporte une ligne à retard optique (22, 23) variable pour synchroniser le premier faisceau secondaire (11) et le second faisceau secondaire (12).

**4.** Appareil (100) selon l'une des revendications 1 à 3 dans lequel le séparateur optique (2) de faisceau comporte une lame séparatrice.

**5.** Appareil (100) selon l'une des revendications 1 à 4 dans lequel le premier système optique (21, 22, 23, 24, 25, 26, 27, 28) comporte un prisme (28) ajustable en translation pour ajuster la distance de séparation entre le premier faisceau secondaire (11) et le second faisceau secondaire (12).

**6.** Appareil (100) selon l'une des revendications 1 à 5 comportant une platine de déplacement (34) adaptée pour déplacer le matériau (33) suivant au moins une direction transverse à la normale à la surface du matériau (32) au point de focalisation (32).

**7.** Appareil (100) selon l'une des revendications 1 à 6 dans lequel la source laser (1) comprend un laser émettant à une longueur d'onde comprise entre 200 nm et 1100 nm.

**8.** Procédé de génération d'un motif nanostructuré périodique en surface d'un matériau (33), le procédé comprenant les étapes de : génération d'un faisceau d'impulsions source (10) à une longueur d'onde λ, les impulsions source ayant une durée comprise entre cent femtosecondes et cent picosecondes ; séparation optique spatiale du faisceau d'impulsions source (10) en un premier faisceau secondaire (11) et un second faisceau secondaire (12) ; le procédé étant **caractérisé par** les étapes suivantes : orientation du premier faisceau secondaire (11) et du second faisceau secondaire (12) parallèlement à une même direction avec une distance de séparation d non nulle allant de 10 mm à 24 mm ; au moyen d'une lentille F-Theta de longueur focale f, ayant une ouverture supérieure ou égale à 0,8*f et dont la longueur focale f est inférieure à 40 mm, focalisation et superposition du premier faisceau secondaire (11) et du second faisceau secondaire (12) sur une même zone (32) de la surface du matériau (33) avec un angle d'incidence ALPHA dans un plan d'incidence, le premier faisceau secondaire (11) et le second faisceau secondaire (12) étant polarisés linéairement avec un état de polarisation dans le plan d'incidence, le premier faisceau secondaire (11) et le second faisceau secondaire (12), superposés spatialement et temporellement dans ladite zone, ayant une fluence supérieure au seuil d'ablation du matériau, balayage de la surface du matériau avec le premier faisceau secondaire (11) et le second faisceau secondaire (12) focalisés sur ladite surface sur un champ de $\pm 5$ degrés, suivant une ou deux directions transverses à la normale à la surface du matériau au point de focalisation tout en superposant les taches de focalisation avec un recouvrement spatial d'au moins 50%, l'angle d'incidence ALPHA et/ou la fluence étant ajustés de manière à induire un motif nanostructuré périodique s'étendant dans une direction transverse au plan d'incidence, le motif nanostructuré périodique présentant dans le plan d'incidence une période de modulation spatiale P2 égale à une fraction entière d'une période spatiale P1 :

$$P2 = \frac{P1}{N}$$

, où N est un nombre entier supérieur ou égal à 2 et P1 représente une période spatiale inhérente aux interférences entre le premier faisceau secondaire et le second faisceau secondaire définie par

$$P1 = \frac{\lambda}{2\,sin(ALPHA)}$$

**Patentansprüche**

**1.** Gerät (100) zur Erzeugung eines nanostrukturierten periodischen Motivs auf einer Oberfläche eines Materials (33), wobei das Gerät (100) eine zum Erzeugen eines Quellimpulsstrahls (10) mit einer Wellenlänge λ ausgelegte Laserquelle (1), einen zum räumlichen Trennen des Quellimpulsstrahls (10) in einen ersten Sekundärstrahl (11) und einen zweiten Sekundärstrahl (12) angeordneten optischen Strahlteiler (2), ein zum Ausrichten des ersten Sekundärstrahls (11) und des zweiten Sekundärstrahls (12) parallel zu einer selben Richtung mit einem von Null verschiedenen Abstand ausgelegtes erstes optisches System (21, 22, 23, 24, 25, 26, 27, 28), ein optisches Fokussiersystem (31) mit einer zum Empfangen des ersten Sekundärstrahls (11) und des zweiten Sekundärstrahls (12) ausgelegten Öffnung aufweist, wobei das optische Fokussiersystem (31) dazu ausgelegt ist, den ersten Sekundärstrahl (11) und den zweiten Sekundärstrahl (12) auf ein und denselben Bereich (32) der Oberfläche des Materials (33) unter einem Einfallswinkel ALPHA in einer Einfallsebene zu fokussieren und zu überlagern, wobei der erste Sekundärstrahl (11) und der zweite Sekundärstrahl (12) mit einem Polarisationszustand in der Polarisationsebene linear polarisiert werden, **dadurch gekennzeichnet, daß** das Gerät einen zwischen dem ersten optischen System (21, 22, 23, 24, 25, 26, 27, 28) und dem optischen Fokussiersystem (31) angeordneten Scanner (30) aufweist, wobei das optische Fokussiersystem (31) eine F-theta-Linse mit einer Brennweite f aufweist, eine Öffnung von größer als oder gleich 0,8·f hat und deren Brennweite f kleiner als 40 mm ist, wobei der Trennungsabstand von 10 mm bis 24 mm geht, wobei der Scanner dazu ausgelegt ist, die Oberfläche des Materials mit dem ersten Sekundärstrahl (11) und dem zweitem Sekundärstrahl (12), die in einem Bereich von ±5 Grad auf die Oberfläche fokussiert sind, in einer oder zwei zur Normalen auf der Oberfläche des Materials transversalen Richtung zu überstreichen und dabei die Fokussierungsfelder mit einer räumlichen Überdeckung von mindestens 50 % zu überlagern, daß die Quellimpulse eine Dauer zwischen 100 fs und 100 ps haben und daß der erste Sekundärstrahl (11) und der zweite Sekundärstrahl (12), die in dem besagten Bereich (32) räumlich und zeitlich überlagert sind, eine Fluenz haben, die größer als die Abtragungsschwelle des Materials ist, wobei der Einfallswinkel ALPHA und/oder die Fluenz so eingestellt ist/sind, daß ein sich in einer zur Einfallsebene senkrechten Ebene erstreckendes nanostrukturiertes periodisches Motiv induziert wird, wobei das nanostrukturierte periodische Motiv in der Einfallsebene eine räumliche Modulationsperiode P2 aufweist, die gleich einem ganzzahligen Bruch einer räumlichen Periode

$$P1 : P2 = \frac{P1}{N}$$

ist, wobei N eine ganze Zahl größer als oder gleich 2 ist und P1 eine räumliche Periode darstellt, die den durch

$$P1 = \frac{\lambda}{2 \sin(ALPHA)}$$

definierten Interferenzen zwischen dem ersten Sekundärstrahl (11) und dem zweiten Sekundärstrahl (12) innewohnt.

2. Gerät (100) gemäß Anspruch 1 mit Mitteln (13) zum Einstellen der Polarisation des Quellimpulsstrahls (10) und/oder Mitteln (14, 15) zum Einstellen der Polarisation des ersten Sekundärstrahls (11) und des zweiten Sekundärstrahls (12).

3. Gerät (100) gemäß einem der Ansprüche 1 bis 2, bei dem das erste optische System (21, 22, 23, 24, 25, 26, 27, 28) eine variable optische Verzögerungsleitung (22, 23) zum Synchronisieren des ersten Sekundärstrahls (11) und des zweiten Sekundärstrahls (12) aufweist.

4. Gerät (100) gemäß einem der Ansprüche 1 bis 3, bei dem der optische Strahltrenner (2) einen Strahlteiler aufweist.

5. Gerät (100) gemäß einem der Ansprüche 1 bis 4, bei dem das erste optische System (21, 22, 23, 24, 25, 26, 27, 28) ein im Durchlaß einstellbares Prisma (28) aufweist, um den Trennungsabstand zwischen dem ersten Sekundärstrahl (11 und dem zweiten Sekundärstrahl (12) einzustellen.

6. Gerät (100) gemäß einem der Ansprüche 1 bis 5 mit einer Verlagerungsplatine (34), die dazu ausgelegt ist, das Material (33) am Fokussierungspunkt (32) in mindestens einer zur Normalen auf der Oberfläche (32) des Materials transversalen Richtung zu verlagern.

7. Gerät (100) gemäß einem der Ansprüche 1 bis 6, bei dem die Laserquelle (1) einen bei einer Wellenlänge zwischen 200 nm und 1100 nm ausstrahlenden Laser aufweist.

8. Verfahren zur Erzeugung eines nanostrukturierten periodischen Motivs auf der Oberfläche eines Materials (33), wobei das Verfahren die Schritte des Erzeugens eines Quellimpulsstrahls (10) mit einer Wellenlänge λ, wobei die Quellimpulse eine Dauer zwischen einhundert Femtosekunden und einhundert Pikosekunden haben, der räumlichen optischen Trennung des Quellimpulsstrahls (10) in einen ersten Sekundärstrahl (11) und einen zweiten Sekundärstrahl (12) aufweisen,

wobei das Verfahren durch die folgenden Schritte gekennzeichnet ist:

Orientieren des ersten Sekundärstrahls (11) und des zweiten Sekundärstrahls (12) parallel zu einer selben Richtung mit einem von Null verschiedenen Abstand zwischen 10 mm und 24 mm, mittels einer F-theta-Linse mit einer Brennweite f, die eine Öffnung von größer als oder gleich 0,8·f hat und deren Brennweite f kleiner als 40 mm ist, den ersten Sekundärstrahl (11) und den zweiten Sekundärstrahl (12) auf einen und denselben Bereich (32) der Oberfläche des Materials (33) unter einem Einfallswinkel ALPHA in einer Einfallsebene fokussieren und überlagern, wobei der erste Sekundärstrahl (11) und der zweite Sekundärstrahl (12) mit einem Polarisationszustand in der Polarisationsebene linear polarisiert werden, wobei der erste Sekundärstrahl (11) und der zweite Sekundärstrahl (12), die in dem besagten Bereich (32) räumlich und zeitlich überlagert sind, eine Fluenz haben, die größer als die Abtragungsschwelle des Materials ist, die Oberfläche des Materials mit dem ersten Sekundärstrahl (11) und dem zweitem Sekundärstrahl (12), die in einem Bereich von ±5 Grad auf die Oberfläche fokussiert sind, in einer oder zwei zur Normalen auf der Oberfläche des Materials transversalen Richtung überstreichen und dabei die Fokussierungsfelder mit einer räumlichen Überdeckung von mindestens 50 % überlagern, wobei der Einfallswinkel ALPHA und/oder die Fluenz so eingestellt ist/sind, daß ein sich in einer zur Einfallsebene senkrechten Ebene erstreckendes nanostrukturiertes periodisches Motiv induziert wird, wobei das nanostrukturierte periodische Motiv in der Einfallsebene eine räumliche Modulationsperiode P2 aufweist, die gleich einem ganzzahligen Bruch

$$P1 : P2 = \frac{P1}{N}$$

einer räumlichen Periode ist, wobei N eine ganze Zahl größer als oder gleich 2 ist und P1 eine räumliche Periode darstellt, die den

$$P1 = \frac{\lambda}{2 \sin (ALPHA)}$$

durch definierten Interferenzen zwischen dem ersten Sekundärstrahl (11) und dem zweiten Sekundärstrahl (12) innewohnt.

**Claims**

1. Apparatus (100) for generating a periodic nanostructured pattern on a surface of a material (33), wherein the apparatus (100) comprises a laser source (1) designed for generating a beam of source pulses (10) with a wavelength λ, an optical beam splitter (2) designed for spatially splitting the beam of source pulses (10) into a first secondary beam (11) and a second secondary beam (12), a first optical system (21, 22, 23, 24, 25, 26, 27, 28) designed for orienting the first secondary beam (11) and the second secondary beam (12) parallel to a same direction with a splitting distance different from zero, an optical focusing system (31) with an opening designed for receiving the first secondary beam (11) and the second secondary beam (12), the optical focusing system (31) being able to focus and overlay the first secondary beam (11) and the second secondary beam (12) to a same area (32) of the surface of the material (33) with an angle of incidence ALPHA in a plane of incidence, the first secondary beam (11) and the second secondary beam (12) being linearly polarized with a polarization state in the plane of incidence, **characterized in that** the apparatus comprises a scanner (30) located between the first optical system (21, 22, 23, 24, 25, 26, 27, 28) and the optical focusing system (31), the optical focusing system (31) comprising a F-Theta lens having a focal length f with an opening greater than or equal to 0,8•f and the focal length f being smaller than 40 mm, the splitting distance ranging from 10 mm to 24 mm, the scanner being designed for scanning the surface of the material with the first secondary beam (11) and the second secondary beam (12) which are focused on that surface over a field of ± 5 degrees, in one or two directions transverse to the direction perpendicular to the surface of the material at the focusing point and meanwhile overlapping the focusing spots with a spatial overlapping of at least 50 %, the source pulses have a duration ranging from 100 fs to 100 ps, and **in that** the spatially and timely overlapped first secondary beam (11) and second secondary beam (12) **in that** area have a fluence that is greater than the ablation threshold of the material, the angle of incidence ALPHA and/or the fluence being adjusted so as to induce a periodic nanostructured pattern extending in a direction transverse to the plane of incidence, the periodic nanostructured pattern having a spatial modulation period P2 in the plane of incidence that is equal to an entire fraction of a spatial

$$P1 : P2 = \frac{P1}{N}$$

period , where N is an integer greater than or equal to 2 and P1 represents a spatial period included in interferences between the first secondary beam and the second secondary beam

$$P1 = \frac{\lambda}{2 \sin (ALPHA)}.$$

defined by .

2. Apparatus (100) according to claim 1 comprising means (13) for adjusting the polarization of the beam of source pulses (10) and/or means (14, 15) for adjusting the polarization of the first secondary beam (11) and the second secondary beam (12).

3. Apparatus (100) according to one of claims 1 to 2, wherein the first optical system (21, 22, 23, 24, 25, 26, 27, 28) comprises a variable optical delay line (22, 23) for synchronizing the first secondary beam (11) and the second secondary beam (12).

4. Apparatus (100) according to one of claims 1 to 3, wherein the optical beam splitter (2) comprises a splitting plate.

5. Apparatus (100) according to one of claims 1 to 4, wherein the first optical system (21, 22, 23, 24, 25, 26,27, 28) comprises a prism (28) translationally adjustable for adjusting the splitting distance between the first secondary beam (11) and the second secondary beam (12).

6. Apparatus (100) according to one of claims 1 to 5 comprising a moving plate (34) designed for moving the material (33) in at least one direction that is transverse to the direction perpendicular to the surface of the material (32) at the focusing point (32).

7. Apparatus (100) according to one of claims 1 to 6, wherein the laser source (1) comprises a laser emitting at a wavelength between 200 nm and 1100 nm.

8. Method for generating a periodic nanostructured pattern on a surface of a material (33), the method comprising the steps of: generating a beam of source pulses (10) at a wavelength $\lambda$, the source pulses having a duration ranging from 100 femtoseconds to 100 picoseconds; optical spatial splitting of the beam of source pulses (10) into a first secondary beam (11) and a second secondary beam (12); the method being **characterized by** the following steps: orienting the first secondary beam (10) and the second secondary beam (12) parallel to a same direction with a splitting distance different from zero and ranging from 10 mm to 24 mm; by means of a F-Theta lens having a focal length f with an opening greater than or equal to 0,8•f and the focal length f of which is smaller than 40 mm, focusing and overlaying the first secondary beam (11) and the second secondary beam (12) to a same area (32) of the surface of the material (33) with an angle of incidence ALPHA in a plane of incidence, the first secondary beam (11) and the second secondary beam (12) being linearly polarized with a polarization state in the plane of incidence, the spatially and timely overlapped first secondary beam (11) and second secondary beam (12) in that area having a fluence that is greater than the ablation threshold of the material, scanning the surface of the material with the first secondary beam (11) and the second secondary beam (12) which are focused on that surface over a field of $\pm$ 5 degrees, in one or two directions transverse to the direction perpendicular to the surface of the material at the focusing point and meanwhile overlapping the focusing spots with a spatial overlapping of at least 50 %, the angle of incidence ALPHA and/or the fluence being adjusted so as to induce a periodic nanostructured pattern extending in a direction transverse to the plane of incidence, the periodic nanostructured pattern having a spatial modulation period P2 in the plane of incidence equal to an entire fraction of a

$$P1 : P2 = \frac{P1}{N}$$

spatial period , where N is an integer greater than or equal to 2 and P1 represents a spatial period included in interferences between the first secondary beam and the second secondary

$$P1 = \frac{\lambda}{2 \sin (ALPHA)}$$

beam defined by .

**Fig.1**

**Fig.2**

# Fig.3

# Fig.4

# Fig.5

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- DE 102015214960
- CN 109926712
- US 2014291308 A
- US 20140083984 A

**Littérature non-brevet citée dans la description**

- **A. MADELUNG** ; **S. ALAMRI** ; **T. STEEGE** ; **B. KRUPOP** ; **A.F. LASAGNI** ; **T. KUNZE**. Scanner-based Direct Laser Interference Patterning on Stainless Steel. *Adv. Eng. Mater.*, 2021, 2001414